# EUROPEAN PATENT APPLICATION

(11) **EP 2 194 292 A1**
(43) Date of publication of application: **09.06.2010**
(21) Application number: 08425768.2
(22) Date of filing: 02.12.2008
(51) Int. Cl.: F16G 13/16

(54) **Cable supporting chain with reduced noise emission**

(71) Applicant: Brevetti Stendalto S.p.A., 20052 Monza (MI) (IT)
(72) Inventor: Mauri, Giovanni, 20052 Monza (Milano) (IT)
(74) Representative: Riccardi, Sergio

(57) **Abstract**

Energy chain composed by a plurality of chian-links (10), each one connected to the adjacent one by a pivot (20) comprising elastic means (22, 23) for dampening the impact of a chain-link (10) against the adjacent one once reached limits of the relative rotation allowed thereto, said limit being defined by abutment elements (7) formed on each chain-link.

## Description

The present invention relates to an energy chain, particularly to an energy chain provided with a system damping the noise generated by said energy chain during normal operation thereof.

The currently manufactured energy chains are generally formed with a set of single parts called chain-links, each link having a male side and a female side. Said chain-links are connected to each other by interposition of a pivot which holds the male side of a chain-link integral with the female side of the adjacent chain-link, simultaneously allowing a relative rotation. Such relative rotation is, however, not allowed for the whole round angle, but only in a range defined by the two limit conditions said energy chain can operate between, that are the straight attitude condition, hereinafter called self-support, and the maximum curvature condition, hereinafter called radius. The self-support, therefore, occurs at a straight sections of said chain while supporting its own weight and the weight of cables leaded thereby, without bending or, anyway, departing from the straight attitude. The radius, instead, corresponds to the maximum curvature achievable by each chain section, limit set not only by the chain but also by particular needs of the cables leaded. These two limit conditions are assured by the presence of two mechanical retainers formed into the chain-link body, and the impact of said mechanical retainers against corresponding chain-link strikers establishes the chain lock into both limit conditions.

The above disclosed rotation limit system, however, has the drawback of a noticeable noise emission generated by the alternating impact of the chain-links, or the strikers provided thereon, against the mechanical retainers.

Object of the present invention is therefore to provide an energy chain formed by chain-links able to minimize noise generated by the chain movement during operation.

Further objects and advantages of the low noise emission energy chain according to the present invention will be clear while reading the following detailed description made with reference to the annexed drawings, in which:
fig. 1 is a perspective view of a chain-link o fan energy chain according to a preferred embodiment of the present invention,
fig.2 is a side view of the chain-link in fig. 1,
fig. 3 is a perspective view of lacing pivot between two adjacent chain-links according to a preferred embodiment of the present invention,
fig. 4 is a side view of the mounting position relating two adjacent chain-links of fig. 1,
fig. 5 is a side view of a section of the energy chain according to a preferred embodiment of the present invention at the two limit positions, that are self-support and radius, and

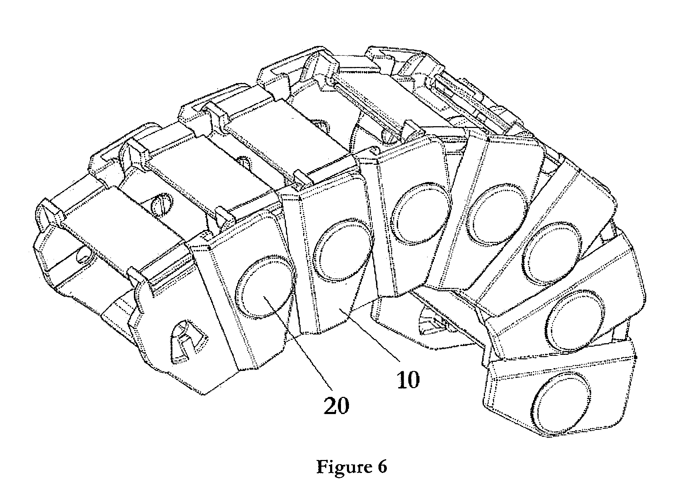

fig. 6 is a perspective view of a section of the energy chain according to a preferred embodiment of the present invention provided with chain-links of fig. 1 and pins of fig. 3.

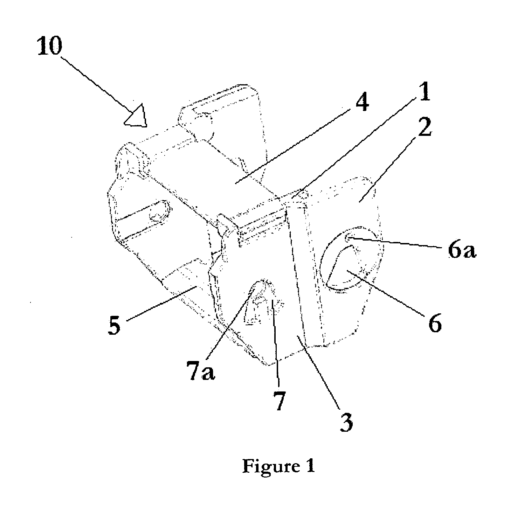

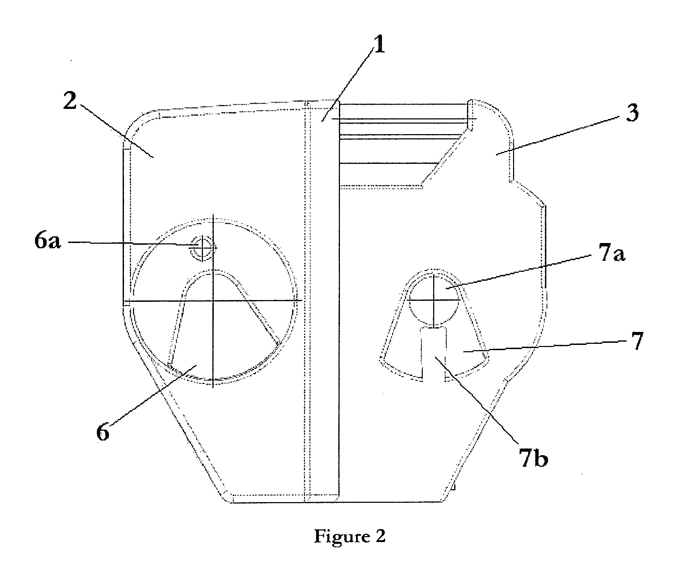

Referring now to fig. 1 and 2, a chain-link 10 comprises a pair of shaped side contours 1, each having a female side 2 and a male side 3 integral with each other, said side contours 1 being made integral with each other by a pair of link studs, upper 4 and lower 5, respectively. On the female side 2 there are formed an opening 6, generally shaped as circular sector, and a reference hole 6a, whilst on the male side 3 there is formed a slot 7, even shaped as a circular sector, further provided with through hole 7a, and with a strike 7b developing along the bisecting line of said circular sector.

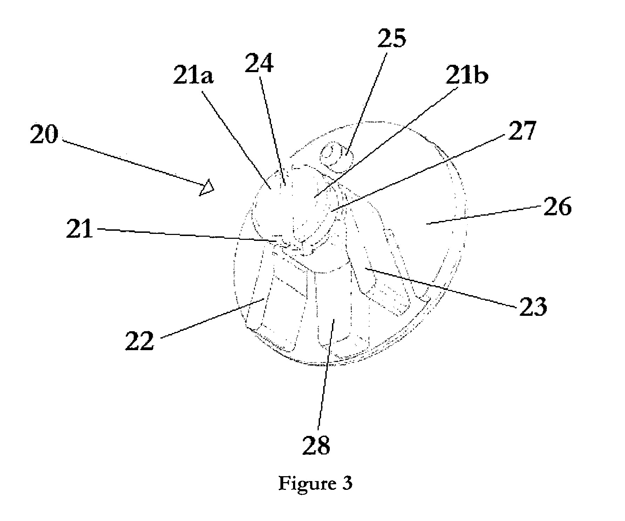

Considering now fig. 3, a lacing pivot 20 is one piece provided with a coupling end 21, an orientating pin 25, a pair of winglets, left 22 and right 23, respectively and, at last, a head 26, simply serving as cover against impurities that eventually may settle among the connection elements. Said coupling end 21 has, then, a groove 27 and a notch 24 formed down to intersection with said groove 27, which divides the final portion of said coupling end 21 into two portions 21a and 21b, respectively. Finally, in a middle position between said winglets 22 and 23 there is a strike 28 formed enbloc.

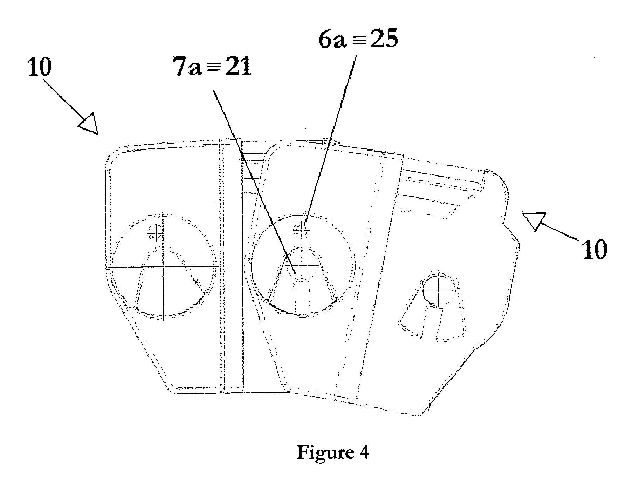

By aid of fig. 4, there are shown two adjacent chain-link 10 having the female side 2 of the first one put on the male side 3 of the second one, and arranged with a relative angle that makes the axis of symmetry of the slot 7 within the first chain-link coincident with the axis of symmetry of the opening 6 of the second chain-link: such configuration corresponds to the mounting position for said chain-link 10, that is a neutral position and middle between the positions corresponding to the two limit conditions. At this point, it is possible to insert said lacing pivot 20, by coupling the orientating pin 25 of said lacing pivot 20 with the reference hole 6a of the second chain-link 10, and the coupling end 21 with the hole 7a of the first chain-link. The last operation is made easier by the fact that the portions 21a and 21b of said coupling end 21 approach to each other due to the elastic strain during insertion in said hole 7a, and recover elastically their own original position once the groove 27 is fully housed into said hole 7a. In this manner the lacing pivot 20 is axially constrained in respect of the two chain-links 10. Moreover, the further rotational constraint, provided by the coupling of the orientating pin 25 with the reference hole 6a, makes the second chain-link 10 and the lacing pivot 20 integral with each other. It has to be observed how the position of the reference hole 6a is chosen such that all the above mentioned couplings occur while the two adjacent chain-links 10 are at the mounting position. Referring to the presence of the strike 7a at the slot 7, it is envisioned how these cooperate with each other in order to allow for inserting the lacing pivot 20 down to a given depth in the slot 7. The width of both the strikes 28 and 7 are selected such that they abut against each other even only partially about the whole relative rotation angle allowed to the two asjacent chain-links.

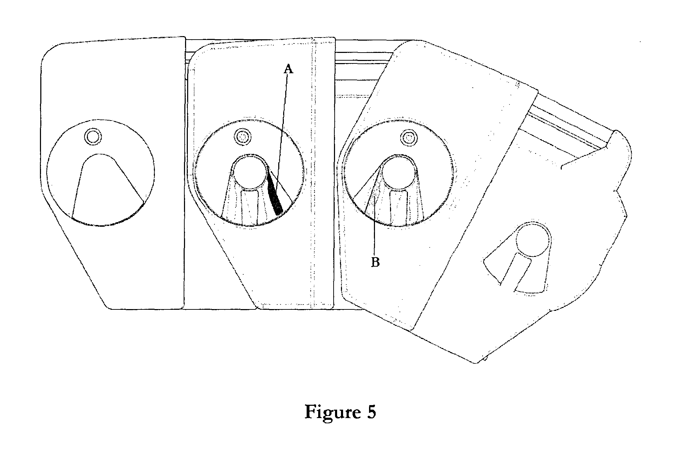

Referring now to fig. 5, there are depicted three consecutive chain-links 10, the first two into self-support condition A and the last two in radius condition B, that is the first and the second in straight attitude and the last one rotated in respect of the second one by the maximum angle allowed. In the self-support condition, said right winglet 23 of the lacing pivot 20 between the first and the second chain-link 10 is elastically deformed being in abutment against the radial wall of the slot 7 within the first chain-link 10 adjacent thereto, whilst in the radius condition the left winglet 22 of the lacing pivot 20 between the second and the third chain-link 10 being in abutment against the radial wall of the slot 7 within the second chain-link 10 adjacent thereto. Therefore, while passing from one to the other limit condition the winglets 22 and 23 of a given lacing pivot 20 are, however, always engaged, but they achieve maximum strain at both the limit conditions. Vice versa, for both the winglets 22 and 23 the minimum strain condition is given at the mounting position above disclosed. It is clear, on the basis of what just said, that by the disclosed configuration the winglets are bent alternatively and not simultaneously. The gradulaness of the elastic strain of each of said winglets 22 and 23 leads, therefore, to the absorption of the kinetic energy that, in absence of the same, would be dissipated, at the impact of two adjacent chain-links, as acoustic energy and, thus, in the form of noise.

## Claims

1. An energy chain comprising:
(i) a plurality of chain-links (10), comprisin at least a pair of side contours (1) and at least a pair of link studs (4, 5), each contour (1) having a female side (2) and a male side (3), and
(ii) a lacing member (20) for connecting a female side (2) of a chain-link (10) with the corresponding male side (3) of the adjacent chain-link (10),
**characterized by the face that** said lacing member (20) has elements (21, 25) for connecting to corresponding connection elements (6, 6a) within said female side (2) and to corresponding connection elements (7a) within said male side (3), the coupling of said lacing memeber (20) forming a hinge (25; 6a) and a support (21; 6) with the female side (2) and a hinge (21; 7a) with said male side (3), the relative rotation range of said male side (3), in respect of said lacing member (20) and said female side (2) being limited by elastic elements (22, 23) being deformed against said strikes (7) in order to absorb impact energy otherwise dissipated in form of acoustic energy.

2. The energy chain according to claim 1, wherein said connection elements (21, 25) of said lacing member (20) are pivots.

3. The energy chain according to claim 2, wherein said pivots have snap fit elements (21 a; 21 b; 27).

4. The energy chain according to claim 2, wherein said corresponding connection elements (6, 6a) within said female side (2) are holes, eventually through-holes.

5. The energy chain according to claim 2, wherein said corresponding connection elements (7a) within said male side (3) are holes, eventually through-holes.

6. The energy chain according to claim 4, wherein said strikes (7) belong to the side surface of a slot formed within said male side (3).

7. The energy chain according to claim 6, wherein said elastic elements (22, 23) are flexible winglets at least partially integral with said lacing member (20), and eiter one or the other alternatively deformed, at their free portion, while impacting against opposite surfaces of said slot.
